(19) Europäisches Patentamt / European Patent Office / Office européen des brevets

(11) **EP 2 786 314 B1**

(12) **FASCICULE DE BREVET EUROPEEN**

(45) Date de publication et mention de la délivrance du brevet:
**24.02.2016 Bulletin 2016/08**

(21) Numéro de dépôt: **12791197.2**

(22) Date de dépôt: **28.11.2012**

(51) Int Cl.:
**G06K 9/62** *(2006.01)*    **G06T 7/20** *(2006.01)*

(86) Numéro de dépôt international:
**PCT/EP2012/073775**

(87) Numéro de publication internationale:
**WO 2013/079497 (06.06.2013 Gazette 2013/23)**

(54) **PROCEDE ET DISPOSITIF DE SUIVI D'UN OBJET DANS UNE SEQUENCE D'AU MOINS DEUX IMAGES**

VERFAHREN UND VORRICHTUNG ZUR VERFOLGUNG EINES OBJEKTS IN EINER FOLGE VON MINDESTENS ZWEI BILDERN

METHOD AND DEVICE FOR FOLLOWING AN OBJECT IN A SEQUENCE OF AT LEAST TWO IMAGES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.12.2011 FR 1161075**

(43) Date de publication de la demande:
**08.10.2014 Bulletin 2014/41**

(73) Titulaire: **Morpho**
**92130 Issy-les-Moulineaux (FR)**

(72) Inventeurs:
• **THOUY, Benoît**
**92445 Issy les Moulineaux (FR)**
• **BOULANGER, Jean-François**
**92445 Issy les Moulineaux (FR)**

(74) Mandataire: **Maillet, Alain**
**Cabinet Le Guen Maillet**
**5, place Newquay**
**B.P. 70250**
**35802 Dinard Cedex (FR)**

(56) Documents cités:
• PEREZ P ET AL: "Robust and Accurate Registration of Images with Unknown Relative Orientation and Exposure", IMAGE PROCESSING, 2005. ICIP 2005. IEEE INTERNATIONAL CONFERENCE ON, PISCATAWAY, NJ, USA,IEEE, vol. 3, 11 septembre 2005 (2005-09-11), pages 1104-1107, XP010851588, DOI: 10.1109/ICIP.2005.1530589 ISBN: 978-0-7803-9134-5
• BING LI ET AL: "Rank-SIFT: Learning to rank repeatable local interest points", COMPUTER VISION AND PATTERN RECOGNITION (CVPR), 2011 IEEE CONFERENCE ON, IEEE, 20 juin 2011 (2011-06-20), pages 1737-1744, XP032037963, DOI: 10.1109/CVPR.2011.5995461 ISBN: 978-1-4577-0394-2
• SHENGPING XIA ET AL: "Ranking the local invariant features for the robust visual saliencies", 19TH INTERNATIONAL CONFERENCE ON PATTERN RECOGNITION, 2008: ICPR 2008; 8 - 11 DEC. 2008, TAMPA, FLORIDA, USA, IEEE, PISCATAWAY, NJ, 8 décembre 2008 (2008-12-08), pages 1-4, XP031411763, ISBN: 978-1-4244-2174-9

**Description**

La présente invention concerne un procédé de suivi d'un objet dans une séquence d'au moins deux images.

Dans le domaine du traitement d'images, l'un des problèmes récurrents est de déterminer le correspondant d'un objet présent dans une image dite précédente de cette séquence d'images, dans une image dite courante de cette séquence d'images. Ce problème se rencontre dans de nombreuses applications telles que la reconstruction d'images tridimensionnelles, l'interpolation temporelle de séquences d'images basée sur le mouvement des objets, la segmentation temporelle de séquences d'images ou encore le suivi d'objet.

Pour le suivi d'objet, ce problème est résolu par la mise en correspondance d'un objet présent dans l'image courante de la séquence d'images à partir de la connaissance de la position de cet objet dans l'image précédente de cette séquence d'images.

L'une des méthodes utilisées est la méthode dite de flot optique. Le calcul du flot optique consiste à extraire un champ global de vitesses dense à partir de la séquence d'images en faisant l'hypothèse que l'intensité (ou la couleur) est conservée au cours du déplacement de l'objet. Par exemple, Quénot (The "Orthogonal Algorithm" for Optical Flow Detection using Dynamic Programming, IEEE International Conference on Accoustics, Speech and Signal Processing, San Francisco, CA, USA, March 1992) présente un exemple de calcul de flot optique basé sur la recherche d'approximations successives d'un champ de déplacements entre deux images qui minimise une distance entre ces images tout en respectant certaines contraintes de continuité et de régularité.

Les méthodes de calcul de flot optique sont des méthodes globales qui sont adaptées lorsque l'amplitude du déplacement de l'objet entre les deux images est faible ou lorsqu'il est connu *a priori* des informations sur le contexte de suivi de ce déplacement. Par contre, cette méthode n'est pas adaptée lorsque l'amplitude du déplacement n'est pas connue *a priori.* C'est le cas, notamment, dans le cas d'applications de contrôle de validité d'un bulletin de loterie. En effet, dans ce type d'applications, un bulletin de loterie est disposé sur une table et une caméra acquiert une séquence d'images de cette table. Comme le bulletin de loterie est disposé par un opérateur sur la table puis généralement mis en place par cet opérateur pour être à peu près au centre de cette table, le déplacement de l'objet bulletin présent dans deux images successives a une amplitude qui est telle que ce déplacement ne peut être correctement approximé par le calcul du flot optique.

Dans ce type de situations, il est préférable d'utiliser une méthode locale dite d'appariement de points. Le principe consiste à former un premier ensemble de points caractéristiques, respectivement un second ensemble, par extraction de points caractéristiques de l'objet présent dans l'image précédente, respectivement courante. Un descripteur local est alors calculé pour chacun des points caractéristiques extraits. A cet effet, on utilise, par exemple, un descripteur SIFT (*Scale-Invariant feature transform* en anglais), ou encore un descripteur SURF (*Speed Up Robust Features* en anglais). On calcule ensuite la similarité entre le descripteur de chaque point de l'image précédente et le descripteur de chaque point de l'image courante, et on forme des couples de points appariés en cherchant à associer à chaque point de l'image précédente un point de l'image courante de manière à maximiser un critère, habituellement global, fondé sur les appariements de points considérés et ce sous la contrainte de ne pas utiliser un même point de l'un ou l'autre des ensembles dans deux appariements différents. Chaque couple de points appariés permet alors de définir un vecteur de déplacement et l'analyse de l'ensemble de ces vecteurs de déplacement permet d'estimer un modèle global de déplacement de l'objet entre les deux images. Ce modèle de déplacement est alors, généralement, utilisé pour détecter un objet dans l'image courante en comparant la prédiction de localisation de cet objet dans l'image courante avec un objet présent dans cette image courante.

Lorsque l'objet présente une répétition d'un même motif sur la plupart de sa surface, tel que par exemple une grille de bulletin de loterie, un nombre important de points de l'image courante présente la même similarité par rapport à un même point de l'image précédente. Il s'en suit une ambiguïté d'appariement de points car chaque point de l'image précédente peut être apparié indifféremment à plusieurs points de l'image courante, et choisir l'un de ces points de manière aléatoire peut conduire à une estimation erronée du déplacement global de l'objet.

Pour lever ces ambiguïtés, il est alors connu de l'état de la technique d'utiliser une méthode d'appariement de points telle que par exemple la méthode de vote majoritaire sur la transformation généralisée de Hough ou encore la méthode RANSAC (*RANdom Simple Consensus* en anglais).

De manière générale, le vote majoritaire sur la transformée de Hough est une méthode déterministe qui permet d'estimer les paramètres d'un modèle paramétrique représentant un ensemble de données observées. Le principe consiste à remplir un tableau accumulateur discrétisant l'espace de paramétrisation du modèle. Pour chaque combinaison minimale de données, on calcule un modèle et on incrémente la case du tableau correspondant au modèle selon la discrétisation du tableau. Après avoir répété le processus sur l'ensemble des combinaisons minimales de données possibles, le maximum du tableau donne le jeu de paramètres correct (à la quantification près)

Ce type de transformation a été mis en oeuvre dans le cas de mise en correspondance d'empreintes digitales (Handbook of Fingerprint Recognition, Davide Maltoni et al, pp.184-186, 2003).

Appliquées à la détermination du déplacement d'objet entre deux images, les données d'entrée de la transformée généralisée de Hough sont l'ensemble des couples de points appariés et le modèle est un modèle paramétrique de déplacement d'un objet (rotation/translation ou homographie).

De manière générale, la méthode RANSAC est une méthode itérative qui permet d'estimer les paramètres d'un modèle paramétrique à partir d'un ensemble de données observées qui contient des valeurs aberrantes (*outliers* en anglais). Il s'agit d'une méthode non-déterministe dans le sens où elle permet d'estimer le bon modèle avec une certaine probabilité seulement, celle-ci augmentant à mesure que le nombre d'itérations est grand. La méthode a été publiée pour la première fois par Fischler et Bolles en 1981 (Martin A. Fischler and Robert C. Bolles, «Random Sample Consensus: A Paradigm for Model Fitting with Applications to Image Analysis and Automated Cartography », dans Comm. Of the ACM, vol. 24, juin 1981, p. 381-395). L'hypothèse de base de cette méthode est que les données sont constituées d'*inliers,* à savoir les données dont la distribution peut être expliquée par un ensemble de paramètres du modèle, et des *outliers* qui sont donc des données qui ne correspondent pas à cet ensemble de paramètres choisi. Les valeurs aberrantes peuvent venir, par exemple, des valeurs extrêmes d'un bruit, de mesures erronées ou d'hypothèses fausses quant à l'interprétation des données.

Appliquées à la détermination du déplacement d'objet entre deux images, les données d'entrée de la méthode de RANSAC sont un ensemble de couples de points appariés, chaque couple comprenant un point de l'image courante apparié à un point de l'image précédente, et un modèle paramétrique de déplacement est une rotation, translation, ou homographie.

La méthode RANSAC consiste alors à sélectionner aléatoirement des couples de points appariés, appelés inliers candidats, qui ne présentent pas de conflit entre eux, c'est-à-dire qui n'ont pas en commun un même point de l'image précédente ou un même point de l'image courante. Le nombre d'inliers candidats dépend de la complexité du modèle, fondamentalement du nombre d'équations nécessaires pour calculer tous les paramètres du modèle. Par exemple, le nombre d'inliers est égal à 2 pour un translation/rotation et à 4 pour une homographie.

L'ensemble de couples de points appariés ainsi sélectionnés est alors testé de la manière suivante:

- les paramètres du modèle de déplacement sont ajustés aux inliers candidats, c'est-à-dire que tous les paramètres libres du modèle sont estimés à partir de cet ensemble de couples de points appariés.
- tous les autres couples de points appariés possibles sont ensuite testés sur le modèle ainsi estimé. Si un couple de points appariés correspond bien au modèle estimé alors il est considéré comme un inlier du modèle.
- le modèle estimé est ensuite considéré comme correct si suffisamment de couples ont été classés comme inliers du modèle.
- de manière optionnelle, le modèle est ré-estimé à partir de l'ensemble de ses inliers.
- finalement, le modèle est évalué par son nombre d'inliers et optionnellement par l'erreur moyenne entre les coordonnées des points de l'image courante des couples inliers du modèle et les coordonnées calculées par application du modèle sur les points de l'image précédente des couples inliers du modèle.

Cette procédure est répétée un nombre prédéterminé de fois, chaque fois produisant soit un modèle qui est rejeté parce que trop peu de points sont classés comme inliers, soit un modèle réajusté et une mesure d'erreur correspondante. Dans ce dernier cas, on conserve le modèle réévalué si son erreur est plus faible que celle du modèle précédent.

L'article par P. Perez et N. Garcia "Robust and Accurate Registration of Images with Unknown Relative Orientation and Exposure", International Conference on Image Processing, 2005 propose de détecter des points saillants (coins), de caractériser ces points à l'aide de descripteurs (moments de Zernike), puis de les identifier dans les différentes images où l'on souhaite suivre l'objet en question. A cet effet, des mesures de similarité sont employées lors de l'association des points saillants.

En outre, l'article par B. Li et al. "Rank-SIFT: Learning to rank repeatable local interest points", International Conference on Computer Vision and Pattern Recognition, 2011 cherche également à identifier les points les plus discriminants dans différentes images, sans faire de lien avec les autres candidats dans différentes images.

Quant à l'article par S. Xia et al. "Ranking the local invariant features for the robust visual saliencies", International Conference on Image Processing, 2008, il réalise un classement basé sur la saillance des points.

Ces méthodes d'appariement de points par vote majoritaire ne sont pas adaptées lorsque l'objet présente de larges zones sur lesquelles un même motif est répété telles que des grilles d'un bulletin de loterie parce que comme chaque point de l'image précédente peut être indifféremment associé à un grand nombre de points candidats de l'image courante, ces méthodes d'estimation de paramètres du modèle peinent à distinguer le modèle réel de déplacement parmi l'ensemble des modèles possibles.

Le problème résolu par la présente invention est de remédier aux inconvénients suscités.

A cet effet, la présente invention concerne un procédé de suivi d'un objet dans une séquence d'au moins deux images dites précédente et courante, ledit procédé comportant les étapes suivantes :

- former un premier ensemble de points, respectivement un second ensemble, par extraction de points caractéristiques de cet objet dans l'image précédente, respectivement courante,

- calculer un descripteur local pour chacun des points caractéristiques extraits,
- quantifier la dissimilarité entre le descripteur de chaque point du premier ensemble de points et le descripteur de chaque point du second ensemble de points,
- former des couples de points appariés pour chaque point du premier ensemble de points en fonction des dissimilarités entre descripteurs ainsi quantifiées, chaque couple de points appariés associant un point du premier ensemble de points avec un point du second ensemble de points,
- estimer les paramètres d'un modèle de déplacement de l'objet entre les deux images à partir de couples de points appariés ainsi formés.

Le procédé est caractérisé, selon la présente invention, en ce que l'étape d'estimation des paramètres du modèle de déplacement est précédée d'une étape de sélection des couples de points appariés utilisés pour estimer les paramètres du modèle de déplacement, au cours de laquelle lesdits couples de points appariés sont uniquement sélectionnés parmi ceux qui sont relatifs à des points du premier ensemble de points qui sont singuliers, chaque point du premier ensemble de points étant un point singulier,

- d'une part, si la dissimilarité la plus faible entre le descripteur de ce point du premier ensemble de points et le descripteur d'un point du second ensemble de points est inférieure à un seuil prédéterminé et,
- les points du second ensemble de points qui sont relatifs à ce point du premier ensemble de points étant ordonnés par dissimilarité croissante pour former une liste de points ordonnés, si, d'autre part, il existe un indice $K_i$ de cette liste tel que la dissimilarité soit inférieure à une valeur prédéterminée et que cet indice $K_i$ est tel que l'écart entre la dissimilarité entre le point du premier ensemble de points et le point du second ensemble de points qui est relatif à cet indice $K_i$, et la dissimilarité entre le point du premier ensemble de points et le point du second ensemble qui est relatif à l'indice qui suit l'indice $K_i$, est supérieur à un seuil prédéterminé.

L'étape de sélection permet de ne conserver que les points de l'image précédente qui ont une bonne similarité avec au moins un point de l'image courante et de ne conserver que les appariements entre chacun de ces points de l'image précédente avec les points de l'image courante qui leur sont les plus similaires au sens des descripteurs. Cette étape permet également de rejeter les points qui peuvent être indifféremment appariés avec un grand nombre de points. Ainsi, cette sélection de couples de points appariés permet de ne conserver que les couples de points appariés les plus significatifs ce qui permet de réduire les erreurs d'appariement et donc d'accroître la robustesse de l'estimation du modèle de déplacement d'un objet sur lequel un même motif est répété.

L'invention concerne également un dispositif comportant des moyens pour mettre en oeuvre le procédé, un programme d'ordinateur, qui peut être stocké sur un support et/ou téléchargé d'un réseau de communication, afin d'être lu par un système informatique ou un processeur. Ce programme d'ordinateur comprend des instructions pour implémenter le procédé mentionné ci-dessus, lorsque ledit programme est exécuté par le système informatique ou le processeur. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

La Fig. 1 représente un diagramme des étapes du procédé de suivi d'objet selon la présente invention.
Les Figs. 2 et 3 illustrent des étapes du procédé de suivi d'objet.
La Fig. 4 illustre un mode de réalisation du procédé de suivi d'objet.
La Fig. 5 illustre schématiquement l'architecture d'un dispositif prévu pour mettre en oeuvre le procédé d'appariement.

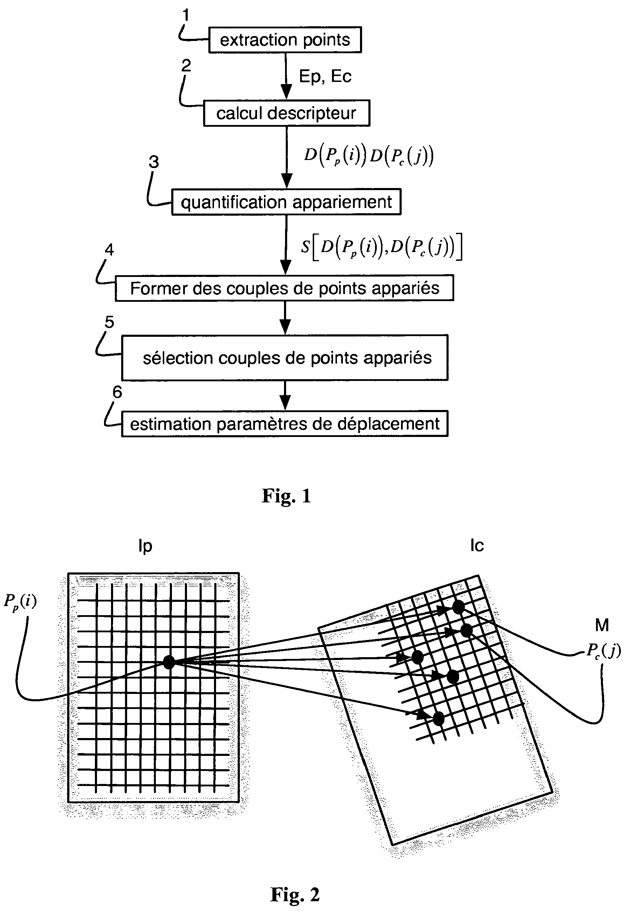

De manière générale, le procédé de suivi d'un objet dans une séquence d'au moins deux images dites précédente Ip et courante $I_c$ tel que illustré à la Fig. 1, comporte une étape 1 pour former un premier ensemble $E_p$ de points $E_p = \{P_p(1),...,P_p(i),...,P_p(N)\}$ par extraction de N points caractéristiques $P_p(i)$ de l'objet présent dans l'image Ip et pour former un second ensemble $E_c$ de points $E_c = \{P_c(1),...,P_c(i),...,P_c(M)\}$ par extraction de M points caractéristiques $P_c(j)$ de l'objet présent dans l'image $I_c$ tel que illustré à la Fig. 2 où N est ici égal à 1 et M est égal à 5. Ces valeurs entières N et M ne sont données ici qu'à titre d'exemple et ne sauraient limiter la portée du procédé.

Les points caractéristiques sont extraits par une méthode connue de l'état de la technique telle que par exemple un détecteur de Harris ou un détecteur de Moravec. Toutefois, le procédé n'est nullement limité à l'utilisation de ces détecteurs mais peut s'appliquer quelle que soit la méthode d'extraction de points caractéristiques utilisée.

Le procédé comporte aussi une étape 2 pour calculer un descripteur local $D(P_p(i))$ pour chacun des N points caractéristiques extraits et un descripteur $D(P_c(j))$ pour chacun des M points caractéristiques extraits. Les descripteurs sont par exemple des descripteurs SIFT (*Scale Invariant Feature Transform* en anglais) ou SURF (*Speed Up Robust Features* en anglais). Toutefois, le procédé n'est aucunement limité à ces descripteurs mais peut s'appliquer quelle que soit la méthode utilisée pour décrire les caractéristiques visuelles d'un voisinage d'un point caractéristique.

Le procédé comporte, de plus, une étape 3 pour quantifier la dissimilarité entre le descripteur $D(P_p((i))$ de chaque point $P_p(i)$ de l'image Ip et le descripteur $D(P_c(j))$ de chaque point $P_c(j)$ de l'image $I_c$. Par exemple, une fonction de dissimilarité $DIS\lfloor D(P_p(i)), D(Pc(j))\rfloor$ est définie par $1 - SIM\lfloor D(P_p(i)), D(P_c(j))\rfloor$ avec $SIM\lfloor D(P_p(i)), D(P_c(j))\rfloor$ une fonction de similarité définie entre descripteurs par exemple par la norme $L_1$ ou $L_2$ dans l'espace des descripteurs, et normalisée à 1. D'autres méthodes connues de l'état de la technique peuvent être utilisées sans pour autant sortir de la portée de la présente invention. De plus, par la suite, les procédés sont décrits en utilisant la dissimilarité $DIS\lfloor D(P_p(i)), D(P_c(j))\rfloor$ entre descripteurs. Toutefois, des procédés qui utiliseraient la similarité entre descripteurs au lieu de la dissimilarité ne sortent pas de la portée de la présente invention.

Le procédé comporte également une étape 4 pour former M couples de points appariés pour chaque point $P_p(i)$ en fonction des dissimilarités entre descripteurs ainsi quantifiées, chaque couple $C(i, j)$ de points appariés associant un point $P_p(i)$ avec un point $P_c(j)$. Par exemple, ces M couples $C(i, j)$ de points appariés au point $P_p(i)$ correspondent aux points du second ensemble qui ont les dissimilarités les plus faibles par rapport à ce point $P_p(i)$.

Le procédé comporte une étape (5) de sélection de couples de points appariés et une étape 6 d'estimation des paramètres d'un modèle de déplacement de l'objet entre les images précédente et courante à partir de l'ensemble des couples de points appariés ainsi sélectionnés et non des MxN couples de points appariés comme c'est le cas dans l'état de la technique.

Au cours de l'étape 5, les couples de points appariés, qui sont utilisés pour estimer les paramètres du modèle de déplacement, sont uniquement sélectionnés parmi ceux qui sont relatifs à des points du premier ensemble de points qui sont singuliers.

Chaque point $P_p(i)$ du premier ensemble de points est un point singulier :

- d'une part, si la dissimilarité la plus faible entre le descripteur de ce point $P_p(i)$ et le descripteur d'un point $P_c(j)$ du second ensemble de points est inférieure à un seuil prédéterminé TH1 et,

- les points $P_c(j)$ qui sont relatifs à ce point $P_p(i)$ étant ordonnés par dissimilarité croissante pour former une liste $P_c^i$ de points ordonnés, si, d'autre part, il existe un indice $K_i$ de cette liste tel que la dissimilarité $DIS\lfloor D(P_p(i)), D(P_c(j))\rfloor$ soit inférieure à une valeur prédéterminée TH2 et que cet indice $K_i$ est tel que l'écart entre la dissimilarité entre le point $P_p(i)$ et le point $P_c^i(K_i)$ qui est relatif à cet indice $K_i$, et la dissimilarité entre le point du premier ensemble de points et le point $P_c(K_i + 1)$ du second ensemble qui est relatif à l'indice qui suit l'indice $K_i$, est supérieur à un seuil prédéterminé TH3.

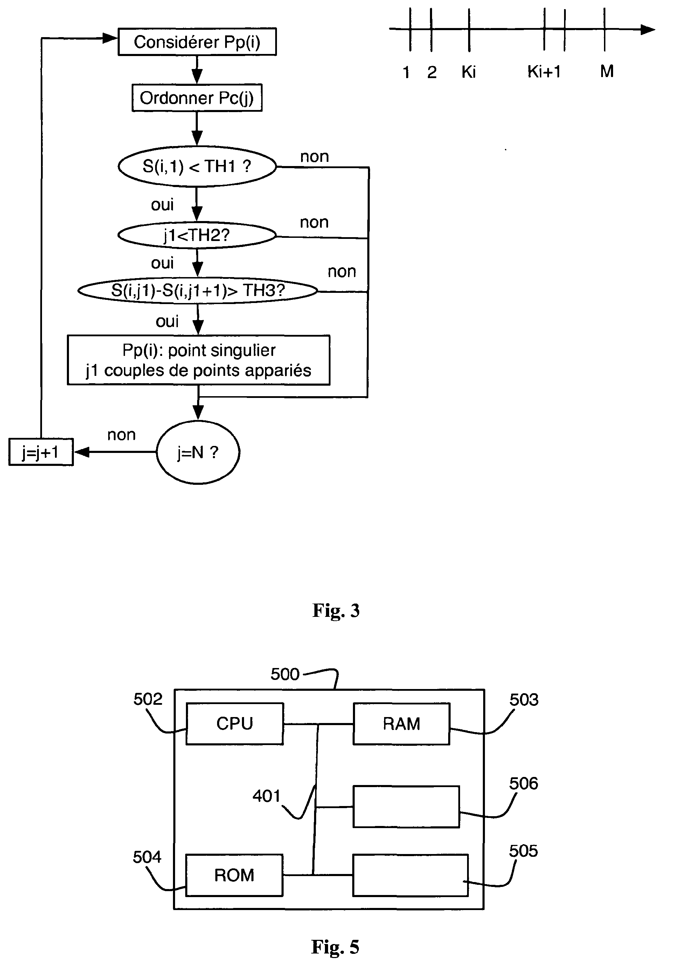

Selon un mode de réalisation de l'étape 5 illustré à la Fig. 3, pour chaque point $P_p(i)$ les points $P_c(j)$ issus des M couples $C(i, j)$ associés à ce point $P_p(i)$ sont ordonnés selon leur dissimilarité croissante entre leur descripteur et celui du point $P_p(i)$ formant la liste $P_c^i$. Le point $P_c^i(1)$ est alors le point dont la dissimilarité est la plus faible c'est-à-dire que le point $P_c^i(1)$ est celui des points $P_c(j)$ qui ressemble le plus au point $P_p(i)$ en terme de descripteurs et le point $P_c^i(M)$ est celui des points $P_c(j)$ qui ressemble le moins au point $P_p(i)$

Ainsi, la première condition pour que le point $P_p(i)$ soit un point singulier est que la dissimilarité $DIS\lfloor D(P_p(i)), D(P_c^i(1))\rfloor$ entre le point $P_c^i(1)$ et le point $P_p(i)$ soit inférieure au seuil TH1.

La seconde condition qui doit être vérifiée est la suivante. La dissimilarité $DIS\lfloor D(P_p(i)), D(P_c^i(K_i))\rfloor$ doit, d'une part, être inférieure au seuil TH2. L'écart entre la dissimilarité $DIS\lfloor D(P_p(i)), D(P_c^i(K_i))\rfloor$ entre le descripteur du point $P_p(i)$ et le descripteur du point $P_c^i(K_i)$ et la dissimilarité $DIS\lfloor D(P_p(i)), D(P_c^i(K_i+1))\rfloor$ entre le descripteur du point $P_p(i)$ et le descripteur du point $P_c^i(K_i+1)$ (qui suit le point $P_c^i(K_i)$ dans l'ordre croissant de dissimilarité) est calculé. La seconde condition est vérifiée si, d'autre part, cet écart de dissimilarité est supérieur au seuil TH3.

La valeur $K_i$ n'est pas fixée *a priori,* et est propre à chaque point $P_p(i)$ et $K_i$ peut donc changer pour chaque point $P_p(i)$. La valeur $K_i$ est initialement égale à 1 et si l'écart entre la dissimilarité $DIS\lfloor D(P_p(i)), D(P_c^i(1))\rfloor$ et

$DIS\lfloor D(P_p(i)), D(P_c^i(2))\rfloor$ est inférieur à TH3, l'indice $K_i$ est incrémenté de 1. Si l'écart entre la dissimilarité

$DIS\lfloor D(P_p(i)), D(P_c^i(2))\rfloor$ et $DIS\lfloor D(P_p(i)), D(P_c^i(3))\rfloor$ est encore inférieur à TH3, l'indice $K_i$ est à nouveau incrémenté de 1 et ainsi de suite jusqu'à ce que l'écart entre la dissimilarité $DIS\lfloor D(P_p(i)), D(P_c^i(K_i))\rfloor$ et

$DIS\lfloor D(P_p(i)), D(P_c^i(K_i+1))\rfloor$ soit supérieur à TH3 et tant que la dissimilarité $DIS\lfloor D(P_p(i)), D(P_c^i(K_i))\rfloor$ reste inférieure à TH2.

Si l'une des conditions ci-dessus n'est pas vérifiée, le point $P_p(i)$ n'est pas considéré comme étant un point singulier et $K_i = 0$.

Selon un mode de réalisation des étapes 5 et 6, $K_i$ couples de points appariés sont sélectionnés parmi les couples de points appariés relatifs à chaque point singulier $P_p(i)$, lesdits $K_i$ couples de points appariés étant ceux qui ont des dissimilarités les plus faibles. Selon l'exemple de la Fig. 3, seuls les trois premiers couples de points appariés sont sélectionnés ($K_i = 3$). Les paramètres du modèle de déplacement de l'objet sont alors estimés par vote majoritaire à partir des $K = \sum_{i=0}^{N} K_i$ couples de points appariés ainsi sélectionnés et non pas les MxN couples de points appariés comme c'est le cas dans l'état de la technique.

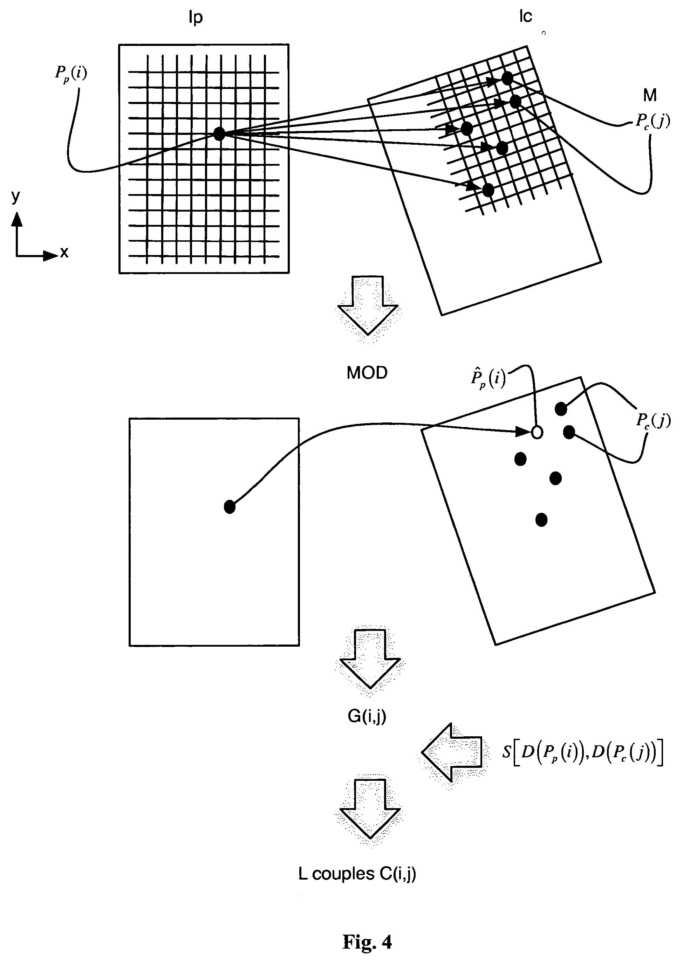

Selon une variante de ce mode de réalisation illustré à la Fig. 4, un coût géométrique $G(i, j)$ est associé à chacun des $K_i$ couples $C(i, j)$ de points appariés $(P_p(i), P_c(j))$. Ce coût géométrique $G(i, j)$ est une fonction de l'erreur entre l'estimation $\hat{P}_p(i)$ de la localisation du point $P_p(i)$ dans l'image Ic selon le modèle de déplacement ainsi estimé et la localisation du point $P_c(j)$. $L_i$ des $K_i$ couples de points appariés $C(i, j)$ sont alors considérés par point $P_p(i)$. $L_i$ est une valeur entière. Lesdits $L_i$ couples de points appariés correspondent aux points $P_c(j)$ qui minimisent une fonction combinant, d'une part, leurs dissimilarités avec le point $P_p(i)$ et, d'autre part, leurs coûts géométriques $G(i, j)$. Par exemple, cette fonction est donnée par $DIS\lfloor D(P_p(i)), D(P_c(j))\rfloor + \alpha.G(i, j)$ avec $\alpha$ un facteur de pondération fixé *a priori* et le coût géométrique $G(i, j)$ est la distance euclidienne entre l'estimée $\hat{P}_p(i)$ de la localisation du point $P_p(i)$ et la localisation du point $P_c(i)$ qui lui est apparié.

En d'autres termes, les $L_i$ points sont les points qui sont les plus similaires avec le point $P_p(i)$ considéré et dont les prédictions dans l'image courante sont les plus proches géographiquement de ce point.

Les paramètres du modèle de déplacement de l'objet sont alors estimés par vote majoritaire à partir des $L = \sum_{j=1}^{N} L_i$ couples de points appariés ainsi sélectionnés.

Ce mode de réalisation est avantageux car la prise en compte d'une contrainte géométrique pour la sélection des points de l'image courante candidats pour être appariés avec un point de l'image précédente permet d'éviter des aberrations d'appariement qui se produisent lorsque deux points appariés sont en fait des points de l'objet dont l'appariement ne respecte pas la géométrie de l'objet.

Selon un mode de réalisation, le déplacement de l'objet est modélisé par une translation et/ou une rotation définie(s) dans un plan (x,y) et les paramètres de ce modèle sont estimés à partir de l'ensemble soit des K soit des L couples de points appariés sélectionnés $C(i, j)$.

Selon un mode préféré, le déplacement de l'objet est modélisé par une homographie et les paramètres de ce modèle sont estimés à partir de l'ensemble des L couples de points appariés sélectionnés $C(i, j)$.

L'estimation du déplacement par homographie permet alors d'avoir un modèle du déplacement de l'objet très précis et l'estimation de la localisation de l'objet dans l'image courante est alors très proche de l'objet réellement présent dans cette image et ce même si l'amplitude du déplacement de cet objet entre les deux images est importante. La fiabilité de détection de l'objet dans l'image courante en est alors accrue.

Selon un mode de réalisation préféré, l'estimation des paramètres d'un modèle de déplacement de l'objet est réalisée par une méthode RANSAC prenant en entrée soit les K soit les L couples de points appariés ainsi sélectionnés pour chaque point $P_p(i)$. Les détails de cette méthode RANSAC se trouvent dans l'article « Deterministic Sample Consensus with Multiple Match Hypotheses », Macllroy, Rosten, Taylor et Drummond, BMVC 2010.

Selon un mode de réalisation, l'estimation des paramètres du modèle de déplacement est réalisée par une transformée de Hough prenant en entrée soit les K soit les L couples de points appariés ainsi sélectionnés pour chaque point $P_p(i)$.

A titre d'exemple, l'estimation des paramètres du modèle de déplacement, ici une translation/rotation, est réalisée de la manière suivante par vote majoritaire sur la transformée de Hough. Pour chaque couple de points appariés $(P_p(i_1), P_c(j_1))$ parmi les K ou L couples sélectionnés (étape 5) et pour chaque couple de points appariés $(P_p(i_2), P_c(j_2))$

parmi les K ou L couples sélectionnés (étape 5) choisis tels que $i_1 \neq i_2, j_1 \neq j_2$,

Les équations pour calculer une translation-rotation s'écrivent :

$$x_{i2} = S.\cos\theta.x_{i1} - S.\sin\theta.y_{i1} + T_x$$

$$y_{i2} = S.\sin\theta.x_{i1} + S.\cos\theta.y_{i1} + T_y$$

$$x_{j2} = S.\cos\theta.x_{j1} - S.\sin\theta.y_{j1} + T_x$$

$$y_{j2} = S.\sin\theta.x_{j1} + S.\cos\theta.y_{j1} + T_y$$

Le paramètre d'échelle S est ignoré ici.

On calcule donc les paramètres $\theta$, $T_x$ et $T_y$ de la transformation à partir de ce système d'équations, puis on les discrétise suivant la discrétisation d'un cube de vote. Le cube de vote est ici un tableau à 3 dimensions, avec $Q_x$ bins discrétisant la translation $T_x$ dans un intervalle $\left[T_x^{\min}, T_x^{\max}\right]$, $Q_y$ bins discrétisant la translation $T_y$ dans un intervalle $\left[T_y^{\min}, T_y^{\max}\right]$ et $Q_\theta$ bins discrétisant l'angle de rotation $\theta$ dans un intervalle $\left[T_\theta^{\min}, T_\theta^{\max}\right]$ On incrémente alors la case du cube de vote de coordonnées $\left(\left\lfloor \dfrac{T_x - T_x^{\min}}{T_x^{\max} - T_x^{\min}}.Q_x \right\rfloor, \left\lfloor \dfrac{T_y - T_y^{\min}}{T_y^{\max} - T_y^{\min}}.Q_y \right\rfloor, \left\lfloor \dfrac{T_\theta - T_\theta^{\min}}{T_\theta^{\max} - T_\theta^{\min}}.Q_\theta \right\rfloor\right)$, où $\lfloor x \rfloor$ est la

partie entière de x. Un lissage du cube de vote par un filtre de taille 3 est préférablement effectué afin de minimiser les imprécisions des modèles calculés. La translation-rotation choisie est alors celle qui correspond à la case du cube de vote qui contient la valeur la plus élevée.

La Fig. 5 représente schématiquement une architecture d'un dispositif prévu pour mettre en oeuvre le procédé.

Le dispositif 500 comporte, reliés par un bus de communication 501 :

- un processeur, micro-processeur, microcontrôleur (noté $\mu$c) ou CPU (*Central Processing Unit* en anglais ou *Unité Centrale de Traitement* en français) 502 ;
- une mémoire vive RAM (*Random Access Memory* en anglais ou *Mémoire à Accès Aléatoire* en français) 503 ;
- une mémoire morte ROM (*Read Only Memory* en anglais ou *Mémoire à Lecture Seule* en français) 504 ;
- un lecteur 505 de médium de stockage, tel qu'un lecteur de carte SD (*Secure Digital Card* en anglais ou *Carte Numérique Sécurisée* en français) ; et
- des moyens d'interface 506 avec un réseau de communication, comme par exemple un réseau de radiotéléphonie cellulaire.

Le microcontrôleur 502 est capable d'exécuter des instructions chargées dans la RAM 503 à partir de la ROM 504, d'une mémoire externe (non représentée), d'un support de stockage, tel qu'une carte SD ou autre, ou d'un réseau de communication. Lorsque le dispositif 500 est mis sous tension, le microcontrôleur 502 est capable de lire de la RAM 503 des instructions et de les exécuter. Ces instructions forment un programme d'ordinateur qui cause la mise en oeuvre, par le microcontrôleur 502, de tout ou partie des procédés décrits ci-dessus en relation avec la Fig. 1.

Tout ou partie des procédés décrits ci-avant en relation avec la Fig. 1 peut être implémenté sous forme logicielle par exécution d'un ensemble d'instructions par une machine programmable, tel qu'un DSP (*Digital Signal Processor* en anglais ou *Unité de Traitement de Signal Numérique* en français) ou un microcontrôleur, tel que le microcontrôleur 502, ou être implémenté sous forme matérielle par une machine ou un composant dédié, tel qu'un FPGA (*Field-Programmable Gate Array* en anglais ou *Matrice de Portes Programmable sur Camp* en français) ou un ASIC (*Application-Specific Integrated Circuit* en anglais ou *Circuit Intégré Spécifique à une Application* en français).

## Revendications

1. Procédé de suivi d'un objet dans une séquence d'au moins deux images dites précédente et courante, ledit procédé comportant les étapes suivantes :

- former (1) un premier ensemble de points ($E_p$ = {$P_p(1)$,...,$P_p(i)$,...,$P_p(N)$}), respectivement un second ensemble ($E_c$ ={$P_c(1)$,...,$P_c(j)$,...,$P_c(M)$}), par extraction de points caractéristiques de cet objet dans l'image précédente, respectivement courante,
- calculer (2) un descripteur local ($D(P_p(i))$;$D(P_c(j))$) pour chacun des points caractéristiques extraits,
- quantifier (3) la dissimilarité entre le descripteur de chaque point du premier ensemble de points et le descripteur de chaque point du second ensemble de points,
- former (4) des couples de points appariés ($C(i, j)$) pour chaque point du premier ensemble de points en fonction des dissimilarités entre descripteurs ainsi quantifiées, chaque couple de points appariés associant un point du premier ensemble de points avec un point du second ensemble de points,
- estimer (6) les paramètres d'un modèle de déplacement de l'objet entre les deux images à partir de couples de points appariés ainsi formés,

dans lequel l'étape d'estimation des paramètres du modèle de déplacement est précédée d'une étape (5) de sélection des couples de points appariés utilisés pour estimer les paramètres du modèle de déplacement, au cours de laquelle lesdits couples de points appariés sont uniquement sélectionnés parmi ceux qui sont relatifs à des points du premier ensemble de points qui sont singuliers, chaque point du premier ensemble de points étant un point singulier, **caractérisé en ce que** :

- d'une part, si la dissimilarité la plus faible entre le descripteur de ce point du premier ensemble de points et le descripteur d'un point du second ensemble de points est inférieure à un seuil prédéterminé (TH1) et,
- les points du second ensemble de points qui sont relatifs à ce point du premier ensemble de points étant ordonnés par dissimilarité croissante pour former une liste $\left( P_c^i \right)$ de points ordonnés, si, d'autre part, il existe un indice $K_i$ de cette liste tel que la dissimilarité ($DIS\llcorner D(P_p(i)), D(P_c(j))\lrcorner$) soit inférieure à une valeur prédéterminée (TH2) et que cet indice $K_i$ est tel que l'écart entre la dissimilarité entre le point ($P_p(i)$) du premier ensemble de points et le point $\left( P_c^i\left(K_i\right) \right)$ du second ensemble de points qui est relatif à cet indice $K_i$, et la dissimilarité entre le point du premier ensemble de points et le point ($P_c(K_i +1)$) du second ensemble qui est relatif à l'indice qui suit l'indice $K_i$, est supérieur à un seuil prédéterminé (TH3).

2. Procédé selon la revendication 1, dans lequel les couples de points appariés sélectionnés par point singulier sont ceux qui ont les dissimilarités les plus faibles par rapport à ce point singulier, et l'étape d'estimation est basée sur un ensemble de K couples de points appariés qui regroupe les couples de points appariés ainsi sélectionnés pour chaque point singulier.

3. Procédé selon la revendication 1 ou 2, dans lequel un coût géométrique ($G(i, j)$) est associé à chacun des $K_i$ couples de points appariés ainsi sélectionnés, ledit coût géométrique étant une fonction de l'erreur entre l'estimation, selon le modèle de déplacement ainsi estimé, de la localisation du point de l'image précédente dans l'image courante et la localisation du point qui lui est apparié dans l'image courante,

- un nombre entier $L_i$ des $K_i$ couples de points appariés sont alors sélectionnés par point de l'image précédente, lesdits $L_i$ couples de points appariés correspondant aux points de l'image courante qui minimisent une fonction combinant, d'une part, leurs similarités avec ce point de l'image précédente et, d'autre part, leurs coûts géométriques, et
- l'étape d'estimation est basée sur un ensemble de L couples de points appariés qui regroupe les couples de points appariés ainsi sélectionnés pour chaque point singulier.

4. Procédé selon la revendication 3, dans lequel le déplacement de l'objet est modélisé par une homographie et les paramètres de ce modèle sont estimés à partir de l'ensemble des L couples de points appariés sélectionnés.

5. Procédé selon l'une des revendications précédentes, dans lequel l'estimation des paramètres d'un modèle de déplacement de l'objet est réalisée par une méthode RANSAC prenant en entrée soit les K soit les L couples de points appariés ainsi sélectionnés pour chaque point de l'image précédente.

6. Procédé selon l'une des revendications 1 à 4, dans lequel l'estimation des paramètres du modèle de déplacement est réalisée par vote majoritaire sur une transformée de Hough prenant en entrée soit les K soit les L couples de points appariés ainsi sélectionnés pour chaque point de l'image précédente.

**7.** Dispositif de suivi d'un objet dans une séquence d'au moins deux images dites précédente et courante, ledit dispositif comportant des moyens pour :

- former (1) un premier ensemble de points ($E_p = \{P_p(1),...,P_p(i),...,P_p(N)\}$), respectivement un second ensemble ($E_c = \{P_c(1),...,P_c(j),..., P_c(M)\}$), par extraction de points caractéristiques de cet objet dans l'image précédente, respectivement courante,
- calculer (2) un descripteur local ($D(P_p(i))$; $D(P_c(j))$) pour chacun des points caractéristiques extraits,
- quantifier (3) la dissimilarité entre le descripteur de chaque point du premier ensemble de points et le descripteur de chaque point du second ensemble de points,
- former (4) des couples de points appariés ($C(i, j)$) pour chaque point du premier ensemble de points en fonction des dissimilarités entre descripteurs ainsi quantifiées, chaque couple de points appariés associant un point du premier ensemble de points avec un point du second ensemble de points,
- estimer (6) les paramètres d'un modèle de déplacement de l'objet entre les deux images par vote majoritaire à partir de couples de points appariés ainsi formés,
- sélectionner les couples de points appariés utilisés pour estimer les paramètres du modèle de déplacement, lesdits moyens sont configurés pour que lesdits couples de points appariés soient uniquement sélectionnés parmi ceux qui sont relatifs à des points du premier ensemble de points qui sont singuliers, chaque point du premier ensemble de points étant un point singulier, **caractérisé en ce que** :
- d'une part, si la dissimilarité la plus faible entre le descripteur de ce point du premier ensemble de points et le descripteur d'un point du second ensemble de points est inférieure à un seuil prédéterminé (TH1) et,
- les points du second ensemble de points qui sont relatifs à ce point du premier ensemble de points étant ordonnés par dissimilarité croissante pour former une liste $\left( P_c^i \right)$ de points ordonnés, si, d'autre part, il existe un indice $K_i$ de cette liste tel que la dissimilarité ($DIS\_LD(P_p(i), D(P_c(j))\_$l) soit inférieure à une valeur prédéterminée (TH2) et que cet indice $K_i$ est tel que l'écart entre la dissimilarité entre le point ($P_p(i)$) du premier ensemble de points et le point $\left( P_c^i\left( K_i \right) \right)$ du second ensemble de points qui est relatif à cet indice $K_i$, et la dissimilarité entre le point du premier ensemble de points et le point ($P_c(K_i +1)$) du second ensemble qui est relatif à l'indice qui suit l'indice $K_i$, est supérieur à un seuil prédéterminé (TH3).

**8.** Produit programme d'ordinateur, **caractérisé en ce qu'**il comprend des instructions pour mettre en oeuvre, par un dispositif conforme à la revendication 7, le procédé selon l'une des revendications 1 à 6 lorsque ledit programme est exécuté par un processeur du dispositif.

**9.** Moyens de stockage lisibles par ordinateur, **caractérisés en ce qu'**ils stockent un programme d'ordinateur comprenant des instructions pour mettre en oeuvre, par un dispositif adapté, le procédé selon l'une des revendications 1 à 6, lorsque ledit programme est exécuté par un processeur du dispositif et conforme à la revendication 7.

**Patentansprüche**

**1.** Verfahren zum Verfolgen eines Objekts in einer Sequenz aus wenigstens zwei Bildern, genannt das vorherhergehende und das laufende Bild, wobei das Verfahren die folgenden Schritte umfasst:

- das Bilden (1) eines ersten Punktsatzes ($E_p = \{P_p(1),..., P_p(i),...,P_p(N)\}$), respektive eines zweiten Punktsatzes ($E_c = \{P_c(1),...,P_c(j),..., P_c(M)\}$) durch Extrahieren von markanten Punkten dieses Objekts im vorhergehenden, respektive laufenden Bild,
- das Berechnen (2) eines lokalen Deskriptors ($D(P_p(i))$ ; $D(P_c(j))$) für jeden der extrahierten charakteristischen Punkte,
- das Quantifizieren (3) der Dissimilarität zwischen dem Deskriptor jedes Punkts des ersten Punktsatzes und dem Deskriptor jedes Punkts des zweiten Punktsatzes,
- das Bilden (4) von Paaren korrespondierender Punkte ($C(i, j)$) für jeden Punkt des ersten Punktsatzes in Abhängigkeit von den Dissimilaritäten zwischen so quantifizierten Deskriptoren, wobei jedes Paar korrespondierender Punkte einen Punkt des ersten Punktsatzes einem Punkt des zweiten Punktsatzes zuordnet,
- das Schätzen (6) der Parameter eines Fortbewegungsmodells des Objekts zwischen den beiden Bildern ausgehend von so gebildeten Paaren korrespondierender Punkte,

Verfahren, in welchem dem Schritt des Schätzens der Parameter des Fortbewegungsmodells ein Schritt (5) des Auswählens der verwendeten Paare korrespondierender Punkte vorausgeht, um die Parameter des Fortbewegungsmodells zu schätzen, Schritt, bei dem die genannten Paare korrespondierender Punkte nur unter denjenigen ausgewählt werden, die auf Punkte des ersten Punktsatzes die markant sind bezogen sind, wobei jeder Punkt des ersten Punktsatzes ein markanter Punkt ist,

- wenn einerseits die geringste Dissimilarität zwischen dem Deskriptor dieses Punkts des ersten Punktsatzes und dem Deskriptor eines Punkts des zweiten Punktsatzes unter einer vorbestimmten Schwelle (TH1) liegt und
- die Punkte des zweiten Punktsatzes, die auf diesen Punkt des ersten Punktsatzes bezogen sind, nach steigender Dissimilarität geordnet sind, um eine Liste ($P^i{}_c$) der geordneten Punkte zu bilden, wenn andererseits eine Richtzahl $K_i$ dieser Liste vorliegt, die so geartet ist, dass die Dissimilarität ($DIS[D(P_p(i)), D(P_c(j))]$) niedriger ist, als ein vorbestimmter Wert (TH2) und die so geartet ist, dass die Abweichung zwischen der Dissimilariät zwischen dem Punkt ($P_p(i)$) des ersten Punktsatzes und dem Punkt ($P^i{}_c(K_i)$) des zweiten Punktsatzes , der auf diese Richtzahl $K_1$ bezogen ist, und der Dissimilarität zwischen dem Punkt des ersten Punktsatzes und dem Punkt ($P_c(K_i+1)$) des zweiten Satzes, der auf die Richtzahl bezogen ist, die der Richtzahl $K_1$ folgt, über einer vorbestimmten Schwelle (TH3) liegt.

2. Verfahren gemäß Patentanspruch 1, in dem die je markantem Punkt ausgewählten Paare korrespondierender Punkte diejenigen sind, die die geringsten Dissimilaritäten in Bezug auf diesen markanten Punkt aufweisen, und der Schätzungsschritt auf einem Satz aus K Paaren korrespondierender Punkte, der die für jeden markanten Punkt so ausgewählten Paare korrespondierender Punkte zusammenfasst, beruht.

3. Verfahren gemäß Patentanspruch 1 oder 2, in dem jedem so ausgewählten Paar korrespondierender Punkte $K_1$ ein geometrischer Betrag ($G(i,j)$) zugeordnet ist, wobei der genannte geometrische Betrag eine Fehlerfunktion zwischen der Schätzung der Lokalisierung des Punkts des vorhergehenden Bilds im laufenden Bild nach dem so geschätzten Fortbewegungsmodell und der Lokalisierung des mit ihm korrespondierenden Punkts im laufenden Bild ist,

- eine ganze Anzahl $L_i$ der $K_i$ Paare korrespondierender Punkte wird demnach je Punkt des vorhergehenden Bilds ausgewählt, wobei die genannten $L_i$ Paare korrespondierender Punkte den Punkten des laufenden Bilds entsprechen, die eine Funktion minimieren, die einerseits ihre Similaritäten mit diesem Punkt des vorhergehenden Bilds und andererseits ihre geometrischen Beträge kombiniert, und
- der Schätzungsschritt auf einem Satz aus L Paaren korrespondierender Punkte beruht, der die so ausgewählten Paare korrespondierender Punkte für jeden einzigartigen Punkt zusammenfasst.

4. Verfahren gemäß Patentanspruch 3, in dem die Fortbewegung des Objekts durch eine Homographie modelliert wird und die Parameter dieses Modells ausgehend von der Gesamtheit der ausgewählten L Paare korrespondierender Punkte geschätzt werden.

5. Verfahren gemäß einem der vorhergehenden Patentansprüche, in dem die Schätzung der Parameter eines Fortbewegungsmodells des Objekts mit Hilfe einer RANSAC Methode erfolgt, die eingangs entweder die so für jeden Punkt des vorhergehenden Bilds ausgewählten K Paare oder L Paare korrespondierender Punkte verwendet.

6. Verfahren gemäß einem der vorhergehenden Patentansprüche 1 bis 4, in dem die Schätzung der Parameter des Fortbewegungsmodells durch Mehrheitsentscheidung auf einer Hough-Transformation erfolgt, die eingangs entweder die so für jeden Punkt des vorhergehenden Bilds ausgewählten K Paare oder L Paare korrespondierender Punkte verwendet.

7. Vorrichtung zur Verfolgung eines Objekts in einer Sequenz aus wenigstens zwei Bildern, genannt das vorhergehende und das laufende Bild, wobei die Vorrichtung Mittel umfasst, um :

- einen ersten Satz an Punkten ($E_p = \{P_p(1),..., P_p(i),..., P_p(N)\}$), respektive einen zweiten Satz ($E_c = \{P_c(1), ..., P_c(j),..., P_c(M) \}$) durch Extrahieren markanter Punkte dieses Objekts im vorhergehenden, respektive laufenden Bild zu bilden (1),
- für jeden der extrahierten charakteristischen Punkte einen lokalen Deskriptor ($D(P_p(i))$ ; $D(P_c(j))$) zu berechnen (2),
- die Dissimilaritäten zwischen dem Deskriptor jedes Punkts des ersten Punktsatzes und dem Deskriptor jedes Punkts des zweiten Punktsatzes zu quantifizieren (3),

- in Abhängigkeit von den Dissimilaritäten zwischen den so quantifizierten Deskriptoren für jeden Punkt des ersten Punktsatzes Paare ($C(i,j)$) korrespondierender Punkte zu bilden (4), wobei jedes Paar korrespondierender Punkte einen Punkt des ersten Punktsatzes einem Punkt des zweiten Punktsatzes zuordnet,
- die Parameter eines Fortbewegungsmodells des Objekts zwischen den beiden Bildern durch Mehrheitsentscheidung ausgehend von den so gebildeten Paaren korrespondierender Punkte zu schätzen (6),
- die zur Schätzung der Parameter des Fortbewegungsmodells verwendeten Paare korrespondierender Punkte auszuwählen, wobei die genannten Mittel so konfiguriert sind, dass die genannten Paare korrespondierender Punkte ausschließlich unter denjenigen ausgewählt werden, die auf Punkte des ersten Punktsatzes die markant sind bezogen sind, wobei jeder Punkt des ersten Punktsatzes markant ist, **dadurch gekennzeichnet, dass**
- einerseits die geringste Dissimilarität zwischen dem Deskriptor dieses Punkts des ersten Punktsatzes und dem Deskriptor eines Punkts des zweiten Punktsatzes unter einer vorbestimmten Schwelle (TH1) liegt, und
- die Punkte des zweiten Punktsatzes, die auf diesen Punkt des ersten Punktsatzes bezogen sind, nach steigender Dissimilarität geordnet sind, um eine Liste ($P^i_c$) geordneter Punkte zu bilden, und andererseits eine Richtzahl $K_i$ dieser Liste vorliegt, die so geartet ist, dass die Dissimilarität ($DIS[D(P_p(i)), D(P_c(j))]$) unter einem vorbestimmten Wert (TH2) liegt und diese Richtzahl so geartet ist, dass die Abweichung zwischen der Dissimilarität zwischen dem Punkt ($P_p(1)$) des ersten Punktsatzes und dem Punkt ($P^i_c(K_i)$) des zweiten Punktsatzes, der auf diese Richtzahl $K_i$ bezogen ist, und der Dissimilarität zwischen dem Punkt des ersten Punktsatzes und dem Punkt ($P_c(K_i+1)$) des zweiten Satzes, der auf die Richtzahl bezogen ist, die der Richtzahl $K_i$ folgt, über einer vorbestimmten Schwelle (TH3) liegt.

8. Computerprogrammprodukt, **dadurch gekennzeichnet, dass** es Anweisungen zur Durchführung des Verfahrens nach einem der Patentansprüche 1 bis 6 mit einer Vorrichtung gemäß Patentanspruch 7 umfasst, wenn das genannte Programm von einem Prozessor der Vorrichtung ausgeführt wird.

9. Computerlesbare Speichermittel, **dadurch gekennzeichnet, dass** sie ein Computerprogramm speichern, das Anweisungen zur Durchführung des Verfahrens nach einem der Patentansprüche 1 bis 6 mit einer entsprechenden Vorrichtung umfasst, wenn das genannte Programm nach Patentanspruch 7 von einem Prozessor der Vorrichtung durchgeführt wird.

## Claims

1. Method for following an object in a sequence of at least two so-called previous and current images, said method comprising the following steps:

   - forming (1) a first set of points ($E_p$ = {$P_p(1)$,...,$P_p(i)$,...,$P_p(N)$}), and respectively a second set ($E_c$ = {$P_c(1)$,...,$P_c(i)$,...,$P_c(M)$}), by extracting characteristic points of this object in the previous and respectively current images,
   - calculating (2) a local descriptor ($D(P_p(i))$; $D(P_c(j))$) for each of the characteristic points extracted,
   - quantifying (3) the dissimilarity between the descriptor of each point in the first set of points and the descriptor of each point in the second set of points,
   - forming (4) pairs of matched points ($C(i, j)$) for each point in the first set of points according to the dissimilarities between descriptors thus quantified, each pair of matched points associating a point in the first set of points with a point in the second set of points,
   - estimating (6) the parameters of a model of movement of the object between the two images from pairs of matched points thus formed.

   Wherein the step of estimating the parameters of the movement model is preceded by a step (5) of selecting the pairs of matched points used to estimate the parameters of the movement model, during which said pairs of matched points are solely selected from those that relate to points in the first set of points that are singular, each point in the first set of points being a singular point,
   **characterized in that**:

   - firstly, if the smallest dissimilarity between the descriptor of this point in the first set of points and the descriptor of a point in the second set of points is less than a predetermined threshold (TH1), and
   - the points in the second set of points that relate to this point in the first set of points being ordered by increasing dissimilarity in order to form a list ($P^i_c$) of ordered points, if, secondly, there exists an index $K_i$ of this list such

that the dissimilarity ($DISLD(P_p(i), D(P_c(j))\rfloor$) is less than a predetermined value (TH2) and this index $K_i$ is such that the difference between the dissimilarity between the point ($P_p(i)$) in the first set of points and the point $\left( P_c^i \left( K_i \right) \right)$ and the point in the second set points that relates to this index $K_i$, and the dissimilarity between the point in the first set of points and the point ($P_c(K_i + 1)$) in the second set of points that relates to the index that follows the index $K_i$, is above a predetermined threshold (TH3).

2. Method according to claim 1, in which the pairs of matched points selected by a singular point are those that have the lowest dissimilarities with respect to this singular point, and the estimation step is based on a set of K pairs of matched points that contain the pairs of matched points thus selected for each singular point.

3. Method according to claim 1 or 2, in which a geometric cost ($G(i, j)$) is associated with each of the $K_i$ pairs of matched points thus selected, the geometric cost being a function of the error between the estimation, according to the movement model thus estimated, of the location of the point on the previous image in the current image and the location of the point that is matched with it in the current image,

- an integer number $L_i$ of the $K_i$ pairs of matched points are then selected per point of the previous image, said $L_i$ pairs of matched points corresponding to the points on the current image that minimise a function combining firstly their similarities with this point on the previous image and secondly their geometric costs, and
- the estimation step is based on a set of L pairs of matched points that contain the pairs of matched points thus selected for each singular point.

4. Method according to claim 3, in which the movement of the object is modelled by a homography and the parameters of this model are estimated from all the L pairs of matched points selected.

5. Method according to one of the preceding claims, in which the estimation of the parameters of a movement model of the object is done by a RANSAC method taking as its input either the K or the L pairs of matched points thus selected for each point on the previous image.

6. Method according to one of claims 1 to 4, in which the estimation of the parameters of the movement model is done by majority vote on a Hough transform taking as its input either the K or the L pairs of matched points thus selected for each point on the previous image.

7. Device for following an object in a sequence of at least two images referred to as previous and current, said device comprising means for:

- forming (1) a first set of points ($E_p = \{P_p(1),...,P_p(i),...,P_p(N)\}$), and respectively a second set ($E_c = \{P_c(1),...,P_c(i),...,P_c(M)\}$), by extracting characteristic points of this object in the previous and respectively current images,
- calculating (2) a local descriptor ($D(P_p(i))$; $D(P_c(j))$) for each of the characteristic points extracted,
- quantifying (3) the dissimilarity between the descriptor of each point in the first set of points and the descriptor of each point in the second set of points,
- forming (4) pairs of matched points ($C(i, j)$) for each point in the first set of points according to the dissimilarities between descriptors thus quantified, each pair of matched points associating a point in the first set of points with a point in the second set of points,
- estimating (6) the parameters of a model of movement of the object between the two images from pairs of matched points thus formed.
- selecting the pairs of matched points used for estimating the parameters of the movement model, said means are configured so that said pairs of matched points are only selected from those that relate to points in the first set of points that are singular, each point in the first set of points being a singular point,

**characterized in** taht

- firstly, if the smallest dissimilarity between the descriptor of this point in the first set of points and the descriptor of a point in the second set of points is less than a predetermined threshold (TH1), and
- the points in the second set of points that relate to this point in the first set of points being ordered by increasing dissimilarity in order to form a list ($P_c^i$) of ordered points, if, secondly, there exists an index $K_i$ of this list such

EP 2 786 314 B1

that the dissimilarity ($DIS\llcorner D(P_p(i))$, $D(P_c(j))\lrcorner$) is less than a predetermined value (TH2) and this index $K_i$ is such that the difference between the dissimilarity between the point ($P_p(i)$) in the first set of points and the point

$$\left( P_c^i\left(K_i\right)\right)$$ in the second set points that relates to this index $K_i$, and the dissimilarity between the point in the first set of points and the point ($P_c(K_i + 1)$) in the second set of points that relates to the index that follows the index $K_i$, is above a predetermined threshold (TH3).

8. Computer program product, **characterised in that** it comprises instructions for the implementation, by a device according to claim 7, of the method according to one of claims 1 to 6 when said program is executed by a processor of the device.

9. Storage means that can be read by computer, **characterised in that** they store a computer program comprising instructions for the implementation, by a suitable device, of the method according to one of claims 1 to 6, when said program is executed by a processor of the device that is in accordance with claim 7.

13

1 — extraction points

2 ↓ Ep, Ec

calcul descripteur

$D\big(P_p(i)\big)\,D\big(P_c(j)\big)$

3 ↓

quantification appariement

$S\big[D\big(P_p(i)\big),D\big(P_c(j)\big)\big]$

4 ↓

Former des couples de points appariés

5 ↓

sélection couples de points appariés

6 ↓

estimation paramètres de déplacement

**Fig. 1**

Ip                     Ic

$P_p(i)$

M

$P_c(j)$

**Fig. 2**

**Fig. 4**

Considérer Pp(i)

Ordonner Pc(j)

S(i,1) < TH1 ?      non

oui

j1<TH2?      non

oui

S(i,j1)-S(i,j1+1)> TH3?      non

oui

Pp(i): point singulier
j1 couples de points appariés

j=j+1      non      j=N ?

1    2    Ki    Ki+1    M

**Fig. 3**

500

502    CPU          RAM    503

401                 506

504    ROM                 505

**Fig. 5**

**EP 2 786 314 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **QUÉNOT.** The ''Orthogonal Algorithm'' for Optical Flow Detection using Dynamic Programming. *IEEE International Conference on Accoustics, Speech and Signal Processing, San Francisco, CA, USA,* Mars 1992
- **DAVIDE MALTONI et al.** Handbook of Fingerprint Recognition. 2003, 184-186
- **MARTIN A. FISCHLER ; ROBERT C. BOLLES.** Random Sample Consensus: A Paradigm for Model Fitting with Applications to Image Analysis and Automated Cartography. *Comm. Of the ACM,* Juin 1981, vol. 24, 381-395
- **P. PEREZ ET N. GARCIA.** Robust and Accurate Registration of Images with Unknown Relative Orientation and Exposure. *International Conference on Image Processing,* 2005
- **B. LI et al.** Rank-SIFT: Learning to rank repeatable local interest points. *International Conference on Computer Vision and Pattern Recognition,* 2011
- **S. XIA et al.** Ranking the local invariant features for the robust visual saliencies. *International Conference on Image Processing,* 2008
- **MACILROY ; ROSTEN ; TAYLOR ; DRUMMOND.** Deterministic Sample Consensus with Multiple Match Hypotheses. *BMVC,* 2010